(19) Europäisches Patentamt / European Patent Office / Office européen des brevets

(11) **EP 3 906 219 B1**

(12) **EUROPEAN PATENT SPECIFICATION**

(45) Date of publication and mention of the grant of the patent:
**10.01.2024 Bulletin 2024/02**

(21) Application number: **19906993.1**

(22) Date of filing: **14.11.2019**

(51) International Patent Classification (IPC):
**C03C 17/36** $^{(2006.01)}$  **B32B 17/06** $^{(2006.01)}$

(52) Cooperative Patent Classification (CPC):
**C03C 17/3613; C03C 17/36; C03C 17/3626; C03C 17/3639; C03C 17/3644; C03C 17/3649; C03C 17/3652; C03C 17/366; C03C 17/3681;** C03C 2217/944

(86) International application number:
**PCT/KR2019/015561**

(87) International publication number:
**WO 2020/141717 (09.07.2020 Gazette 2020/28)**

(54) **TRANSPARENT SUBSTRATE WITH A MULTILAYER THIN FILM AND MULTIPLE GLAZING UNIT COMPRISING THE SAME**

TRANSPARENTES SUBSTRAT MIT EINER MEHRSCHICHTIGEN DÜNNSCHICHT UND MEHRFACHVERGLASUNGSEINHEIT DAMIT

SUBSTRAT TRANSPARENT COMPORTANT UN FILM MINCE MULTICOUCHE ET VITRAGE MULTIPLE LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2018 KR 20180173721**

(43) Date of publication of application:
**10.11.2021 Bulletin 2021/45**

(73) Proprietor: **Saint-Gobain Glass France 92400 Courbevoie (FR)**

(72) Inventors:
- **HAN, Jin Woo**
  **Gangseo-gu, Seoul 07713 (KR)**
- **JANG, Eun Hack**
  **Gunsan-si, Jeollabuk-do 54162 (KR)**

(74) Representative: **Saint-Gobain Recherche B.P. 135 39, quai Lucien Lefranc 93303 Aubervilliers Cedex (FR)**

(56) References cited:
EP-A1- 2 991 944        EP-A1- 3 319 917
US-A1- 2016 244 361    US-A1- 2018 194 676

**Description**

**[Technical Field]**

The present invention relates to a transparent substrate and a multiple glazing unit. Specifically, the present invention relates to a transparent substrate and a multiple glazing unit capable of simultaneously implementing an excellent emissivity, uncoated surface reflectance, coated surface reflectance, selectivity, and color by adjusting a ratio of a thickness of a third stack to a thickness of a second stack.

**[Background Art]**

A low-emissivity glass (Low-E glass) is a glass on which a low-emissivity layer including a metal such as silver (Ag) having a high reflectance in an infrared region is deposited in a thin film form. The low-emissivity glass is a functional material providing energy saving effects of a building by reflecting radiation in the infrared region to block solar radiation entering into the room from the outside in summer, and preserving heat radiation emitted from the room to the outside in winter. An emissivity of a glass represents a degree to which the glass reflects infrared energy with a long wavelength (2,500 to 40,000 nm). The lower the emissivity is, the higher the reflectance is, such that the amount of infrared energy reflected is further increased, whereby a heat transfer is reduced and a heat transmission coefficient is lowered, resulting in an improvement of heat insulating effects. For example, a ordinary uncoated glass has an emissivity of about 0.84, and in a case of coating the glass, the emissivity is lowered. A glass with a coated layer having a low emissivity may have an emissivity of, for example, 0.10. The lower the emissivity is, the lower the shading coefficient is.

Meanwhile, in general, a coated layer of the low-emissivity glass is constituted by several layers including a dielectric material layer. In a case where such a coated layer is deposited on a transparent substrate (glass substrate), a light reflectance is reduced and a light transmittance is increased, such that visibility of an object is improved.

A solar heat gain coefficient (SHGC) (also referred to as "solar heat gain factor") represents a ratio of the amount of solar energy entering into the room through a window to the total incident solar energy.

In general, it is preferable that a glass has a low emissivity and a low solar heat gain factor in order to improve the heat insulating effect. To this end, it is necessary to increase a thickness of a metallic functional layer (for example, a Ag layer) in the coated layer having a low emissivity. However, when the thickness of the metallic functional layer is increased, an external reflective color is gradually changed to red and a reflectance is thus increased, a transmissive color is gradually changed to yellow and a transmittance is decreased, an indoor reflectance is increased, or a color difference in reflective color is increased according to a thickness of a coated layer or a deviation in refractive index.

In addition, it is known that two or more metallic functional layers are provided in order to improve the heat insulating effect. However, a substrate including two or more metallic functional layers shows a more greenish or yellowish transmissive color (a low a* TL value or a high b* TL value) as compared to a transmissive color of a substrate including a single metallic functional layer.

In addition, a color coordinate value of a reflective color on an uncoated surface of a substrate including two or more metallic functional layers greatly varies depending on an angle. A large interference of internal light occurs in a substrate including two metallic functional layers as compared to that in a substrate including a single metallic functional layer, and thus a change in reflective color depending on an angle is large. Furthermore, in a case where a substrate has a high reflectance, a color sensitivity perceived by human eyes is increased. Therefore, a substrate having a high reflectance and including two metallic functional layers is vulnerable to a change in color depending on an angle as compared to a single substrate.

In addition, in the substrate including two or more metallic functional layers, an internal reflectance is increased as an external reflectance is increased.

It is required for a transparent substrate to have appropriate values of various characteristics directly related to a sputtering-coated layer system, such as an emissivity, an uncoated surface reflectance, a coated surface reflectance, a selectivity, and a color. However, since these characteristics may conflict with each other, it is important to determine an adequate balance between these characteristics.

**[Disclosure]**

**[Technical Problem]**

The present invention has been made in an effort to provide a transparent substrate and a multiple glazing unit. Specifically, the present invention has been made in an effort to provide a transparent substrate and a multiple glazing unit capable of simultaneously implementing an excellent emissivity, uncoated surface reflectance, coated surface reflectance, selectivity, and color by adjusting a ratio of a thickness of a third stack to a thickness of a second stack.

**[Technical Solution]**

An exemplary embodiment of the present invention provides a transparent substrate provided with a multilayer thin film, including: a transparent substrate; a first stack positioned on the transparent substrate and including at least one dielectric layer; a first metallic functional layer positioned on the first stack and having an infrared reflective property; a second stack positioned on the first metallic functional layer and including at least one dielectric layer; a visible light absorbing layer positioned on the second stack; a third stack positioned on the visible light absorbing layer and including at least one dielectric layer; a second metallic functional layer positioned on the third stack and having an infrared reflective property; and a fourth stack positioned on the second metallic functional layer and including at least one dielectric layer.

A ratio of a thickness of the third stack to a thickness of the second stack is 2.5 or more.

A ratio of a thickness of the fourth stack to a thickness of the first stack may be 1.5 or more.

The transparent substrate provided with a multilayer thin film may have a transmissive color in range of $-4 \leq a^* \leq -9$ and $0 \leq b^* \leq -3$ on CIELAB color coordinates, and may have a reflective color on an uncoated surface in range of $-2 \leq a^* \leq 1$ and $-8 \leq b^* \leq -3$ on CIELAB color coordinates.

An absorbance for light with a wavelength of 450 nm (Abs@450nm) may be 35% or less.

The transparent substrate provided with a multilayer thin film may further include blocking layers stacked on at least one of upper surfaces and lower surfaces of the first and second metallic functional layers and preventing the first and second metallic functional layers from being oxidized.

A visible transmittance (TL) may be 40 to 60%, an uncoated surface reflectance (Rext) may be 5 to 30%, and a coated surface reflectance (Rin) may be 15% or less.

A corrected emissivity may be 2.5% or less.

A solar heat gain coefficient (SHGC) may be 0.35 or less.

A selectivity may be 1.6 or more.

Another exemplary embodiment of the present invention provides a multiple glazing unit including two or more transparent substrates spaced apart from each other, wherein at least one of the two or more transparent substrates is the transparent substrate provided with a multilayer thin film.

The multiple glazing unit may have a transmissive color in range of $-4 \leq a^* \leq -9$ and $0 \leq b^* \leq -3$ on CIELAB color coordinates, and may have an external reflective color in range of $-3 \leq a^* \leq 0$ and $-8 \leq b^* \leq -2$ on CIELAB color coordinates.

A solar heat gain coefficient (SHGC) of the multiple glazing unit may be 0.3 or less.

A selectivity of the multiple glazing unit may be 1.7 or more.

**[Description of the Drawings]**

FIG. 1 is a cross-sectional view schematically illustrating a cross section of a transparent substrate provided with a multilayer thin film according to an exemplary embodiment of the present invention.

FIG. 2 is a cross-sectional view schematically illustrating a cross section of a multiple glazing unit (in particular, a double glazing unit) according to an exemplary embodiment of the present invention.

FIG. 3 is a graph showing the results of measuring an absorbance for each ratio of a thickness of a third stack to a thickness of a second stack in experimental examples.

FIG. 4 is a graph showing the results of measuring an absorbance for each ratio of a thickness of a fourth stack to a thickness of a first stack in experimental examples.

FIG. 5 is a graph showing the results of measuring an absorbance for each ratio of a thickness of a second metallic functional layer to a thickness of a first metallic functional layer.

**[Mode for Invention]**

The terms "first", "second", and "third" are used to explain various parts, components, regions, layers, and/or sections, but are not limited thereto. These terms are used only to discriminate one part, component, region, layer, or section from another part, component, region, layer, or section. Thus, a first part, component, region, layer, or section described below may be referred to as a second part, component, region, layer, or section without departing from the scope of the present invention.

The technical terms used herein are to simply describe a particular exemplary embodiment and are not intended to limit the present invention. Singular forms used herein include plural forms, unless they have clearly opposite meanings. The meaning of "comprising" used herein specifies a specific property, area, integer, step, operation, element, and/or component, and it does not exclude the presence or addition of other specific properties, areas, integers, steps, operations, elements, and/or components.

When it is described that any one part is positioned "above" or "on" the other part, the part may be directly positioned "above" or "on" the other part or any other part may be interposed therebetween. On the contrary, when it is described that any one part is "directly on" the other part, there is no other part interposed therebetween.

The term "layer(s)" in the present invention refers to a single layer or multiple layers that are stacked. Here, the multiple layers refer to stacked layers, each of the stacked layers satisfying a corresponding requirement.

The terms "emissivity" and "transmittance" in the present invention are used as commonly known in the art. The term "emissivity" is a measure representing how much light is absorbed and reflected in a predetermined wavelength. In general, the emissivity satisfies the following equation.

$$\text{(Emissivity)} = 1 - \text{(Reflectance of coated surface)}$$

For an architectural use, a value of an emissivity in an infrared spectrum of about 2,500 to 50,000 nm is important.

The term "transmittance" herein refers to a solar transmittance.

Unless otherwise defined, all terms including technical and scientific terms used herein have the same meaning as commonly understood by those skilled in the art to which the present invention pertains. Terms defined in a generally used dictionary are interpreted as meanings according with related technical documents and currently disclosed contents, and are not interpreted as ideal meanings or very formal meanings unless otherwise defined.

Hereinafter, exemplary embodiments of the present invention will be described in detail so that those skilled in the art to which the present invention pertains may easily implement the exemplary embodiments. However, the present invention may be implemented in various different forms and is not limited to the exemplary embodiments described herein.

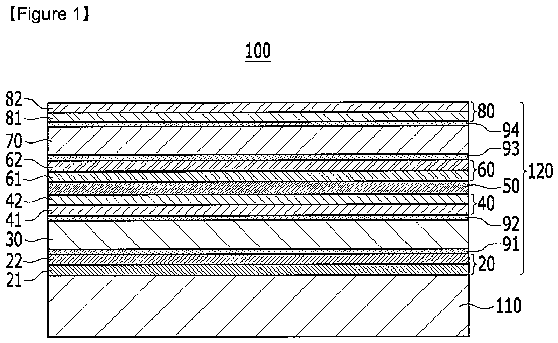

FIG. 1 illustrates a cross section of a transparent substrate 100 provided with a multilayer thin film. The transparent substrate 100 provided with a multilayer thin film of FIG. 1 is merely to illustrate the present invention and the present invention is not limited thereto. Accordingly, the transparent substrate 100 provided with a multilayer thin film may be modified in various forms.

As illustrated in FIG. 1, the transparent substrate 100 provided with a multilayer thin film includes: a transparent substrate 110; a first stack 20 positioned on the transparent substrate 110 and including at least one dielectric layer; a first metallic functional layer 30 positioned on the first stack 20 and having an infrared reflective property; a second stack 40 positioned on the first metallic functional layer 30 and including at least one dielectric layer; a visible light absorbing layer 50 positioned on the second stack 40; a third stack 60 positioned on the visible light absorbing layer 50 and including at least one dielectric layer; a second metallic functional layer 70 positioned on the third stack 60 and having an infrared reflective property; and a fourth stack 80 positioned on the second metallic functional layer 70 and including at least one dielectric layer.

Hereinafter, respective components will be described in detail.

A material of the transparent substrate 110 is not particularly limited, but the transparent substrate 110 is preferably made of a rigid inorganic material such as glass or an organic polymer substrate.

As illustrated in FIG. 1, the first stack 20, the second stack 40, the third stack 60, and the fourth stack 80 may be positioned at different positions from each other. Specifically, the first stack 20 is positioned directly on the transparent substrate 110 and below the first metallic functional layer 30. The second stack 40 is positioned above the first metallic functional layer 30 and directly under the visible light absorbing layer 50. The third stack 60 is positioned directly on the visible light absorbing layer 50 and below the second metallic functional layer 70. The fourth stack 80 is positioned above the second metallic functional layer 70.

Each of the first stack 20, the second stack 40, the third stack 60, and the fourth stack 80 includes at least one dielectric layer. The dielectric layer may include metal oxide, metal nitride, or metal oxynitride.

The metal may include one or more of titanium (Ti), hafnium (Hf), zirconium (Zr), niobium (Nb), zinc (Zn), bismuth (Bi), lead (Pb), indium (In), tin (Sn), and silicon (Si).

More specifically, each of the first stack 20, the second stack 40, the third stack 60, and the fourth stack 80 may include two dielectric layers. Dielectric layers 22, 41, 62, and 81 of the stacks that are close to the first metallic functional layer 30 or the second metallic functional layer 70 may include zinc oxide (ZnO). In addition, dielectric layers 21, 42, 61, and 82 of the stacks that are distant from the first metallic functional layer 30 or the second metallic functional layer 70 may include silicon nitride ($Si_3N_4$). The dielectric layer may be additionally doped with Al and the like. By doping of Al, the dielectric layer may be smoothly formed in a producing process. The dielectric layer may be doped with a doping agent, for example, fluorine, carbon, nitrogen, boron, phosphorus, and/or aluminum. That is, a target used in a sputtering process is doped with aluminum, boron, or zirconium, such that it is possible to improve not only optical properties of the coated layer but also to increase a formation speed of the dielectric layer by sputtering.

In a case where the dielectric layer includes silicon nitride, the dielectric layer is doped with zirconium, and Zr/(Si+Zr) in an atomic ratio may be 10 to 50%. At the time of doping the dielectric layer with zirconium, a transmittance may be improved by increasing a refractive index of the dielectric layer. Specifically, the dielectric layer 61 may be formed of silicon nitride doped with zirconium.

Each of the first stack 20, the second stack 40, the third stack 60, and the fourth stack 80 may include three dielectric layers. In this case, the middle layer of the three dielectric layers may be formed of SnZnO. At this time, durability against scratch may be improved by lowering a compressive stress of the coated layer. Specifically, the third stack 60 may include three dielectric layers.

Each of the first stack 20, the second stack 40, the third stack 60, and the fourth stack 80 may have a thickness of 5 to 100 nm. The first stack 20, the second stack 40, the third stack 60, and the fourth stack 80 have different thicknesses. In an exemplary embodiment of the present invention, each of the first stack 20, the second stack 40, the third stack 60, and the fourth stack 80 may be a single layer or a multilayer having two or more layers, and in a case where a stack is a multilayer having two or more layers, the sum of thicknesses of all the layers is regarded as a thickness of the stack.

More specifically, a thickness of the first stack 20 may be 15 to 30 nm. A thickness of the second stack 40 may be 5 to 30 nm. A thickness of the third stack 60 may be 40 to 100 nm. A thickness of the fourth stack 80 may be 25 to 50 nm.

In addition, according to the present invention, by adjusting a ratio of the thickness of the third stack 60 to the thickness of the second stack 40 ([thickness of third stack]/[thickness of second stack]) to 2.5 or more, an absorbance for light with a wavelength of 450 nm (Abs@450nm) may be lowered. That is, a transmissive color and a reflective color on an uncoated surface may be adjusted to be more bluish by lowering an absorbance for light with a blue wavelength (450 nm) while maintaining an absorbance for light with a green wavelength (550 nm) and light with a red wavelength (650 nm). Specifically, an absorbance for light with a wavelength of 450 nm (Abs@450nm) may be 35% or less. In this case, the absorbance refers to a ratio of intensity of absorbed light when it is assumed that intensity of light corresponding to the wavelength with respect to light incident to the transparent substrate 110 is 100. In addition, an absorbance for light with a wavelength of 550 nm (Abs@550nm) may be 25% or more. In addition, an absorbance for light with a wavelength of 650 nm (Abs@650nm) may be 35% or less. More specifically, the absorbance for light with a wavelength of 450 nm (Abs@450nm) may be 20 to 35%. In addition, the absorbance for light with a wavelength of 550 nm (Abs@550nm) may be 25% to 35%. In addition, the absorbance for light with a wavelength of 650 nm (Abs@650nm) may be 25% to 35%.

Accordingly, the transparent substrate 100 may have a transmissive color in range of $-4 \leq a^* \leq -9$ and $0 \leq b^* \leq -3$ on CIELAB color coordinates, and may have a reflective color on an uncoated surface in range of $-2 \leq a^* \leq 1$ and $-8 \leq b^* \leq -3$ on CIELAB color coordinates. More specifically, the transparent substrate 100 may have a transmissive color in range of $-5 \leq a^* \leq -8$ and $-1 \leq b^* \leq -2$ on CIELAB color coordinates, and may have a reflective color on an uncoated surface in range of $-1 \leq a^* \leq 0$ and $-7 \leq b^* \leq -4$ on CIELAB color coordinates.

By adjusting the ratio of the thickness of the third stack 60 to the thickness of the second stack 40 ([thickness of third stack]/[thickness of second stack]) as described above, a reflectance of the first metallic functional layer 30 for light with a wavelength of 450 nm is increased, an internal reflection between the first metallic functional layer 30 and the second metallic functional layer 70 may thus be minimized. This is because the absorbance for light with a wavelength of 450 nm is increased by the internal reflection between the first metallic functional layer 30 and the second metallic functional layer 70.

More specifically, the ratio of the thickness of the third stack 60 to the thickness of the second stack 40 ([thickness of third stack]/[thickness of second stack]) may be 5.0 to 7.0. Still more specifically, the ratio of the thickness of the third stack 60 to the thickness of the second stack 40 ([thickness of third stack]/[thickness of second stack]) may be 5.5 to 6.5.

A ratio of the thickness of the fourth stack 80 to the thickness of the first stack 20 ([thickness of fourth stack]/[thickness of first stack]) may also contribute to lowering of the absorbance for light with a wavelength of 450 nm (Abs@450nm). The ratio of the thickness of the fourth stack 80 to the thickness of the first stack 20 may be 1.5 or more. More specifically, the ratio of the thickness of the fourth stack 80 to the thickness of the first stack 20 may be 3 to 4.

A refractive index of each of the first stack 20, the second stack 40, the third stack 60, and the fourth stack 80 for light with a wavelength of 550 nm may be 1.8 to 2.3. In addition, an extinction coefficient of each of the stacks may be 0.03 or less. More specifically, the extinction coefficient of each of the stacks may be 0.01 or less.

As illustrated in FIG. 1, in an exemplary embodiment of the present invention, a metallic functional layer has two metallic functional layers, that is, the first metallic functional layer 30 and the second metallic functional layer 70.

The first metallic functional layer 30 and the second metallic functional layer 70 have infrared (IR) reflective properties.

Each of the first metallic functional layer 30 and the second metallic functional layer 70 may be formed of one or more of gold (Au), copper (Cu), palladium (Pd), aluminum (Al), and silver (Ag). Specifically, each of the first metallic functional layer 30 and the second metallic functional layer 70 may be formed of silver or a silver alloy. The silver alloy may include a silver-gold alloy and a silver-palladium alloy.

The sum of thicknesses of the first metallic functional layer 30 and the second metallic functional layer 70 may be 27 to 33 nm. In a case where the thickness of the metallic functional layer is too small, a solar heat gain coefficient (SHGC) may be increased. Alternatively, in a case where the thickness of the metallic functional layer is too large, color coordinates of the transmissive color may be apart from blue.

Specifically, each thickness of the first metallic functional layer 30 and the second metallic functional layer 70 may be 10 to 20 nm.

A ratio of the thickness of the second metallic functional layer 70 to the thickness of the first metallic functional layer 30 ([thickness of second metallic functional layer]/[thickness of first metallic functional layer]) may be 1.8 to 2.2.

In an exemplary embodiment of the present invention, the transparent substrate provided with a multilayer thin film may further include blocking layers stacked on at least one of upper surfaces and lower surfaces of the first metallic functional layer 30 and the second metallic functional layer 70 and preventing the first and second metallic functional layers from being oxidized. FIG. 1 illustrates a case where blocking layers 91 and 92 are stacked on the lower surface and the upper surface of the first metallic functional layer 30, respectively, and blocking layers 93 and 94 are stacked on the lower surface and the upper surface of the second metallic functional layer 70, respectively. Each of the blocking layers 91, 92, 93, and 94 may include one or more of titanium, nickel, chrome, and niobium. More specifically, each of the blocking layers 91, 92, 93, and 94 may include a nickel-chrome alloy. In this case, a part of chrome may be converted into nitride during a sputtering process.

Each of the blocking layers 91, 92, 93, and 94 may have a thickness of 0.5 to 2 nm.

The visible light absorbing layer 50 is positioned between the second stack 40 and the third stack 60. The visible light absorbing layer 50 functions to absorb visible light, and functions as an adjuster capable of adjusting a reflectance difference between layers positioned on and under the visible light absorbing layer 50. That is, in a case where the visible light absorbing layer 50 is not present between the second stack 40 and the third stack 60, an uncoated surface reflectance and a coated surface reflectance may be almost same as each other; however, in an exemplary embodiment of the present invention, a difference between an uncoated surface reflectance and a coated surface reflectance may be generated by the visible light absorbing layer 50. Therefore, an emissivity may be lowered. The visible light absorbing layer 50 may include one or more niobium (Nb), nickel (Ni), chrome (Cr), titanium (Ti), zirconium (Zr), and tin (Sn). The visible light absorbing layer 50 may include nitride of the metal described above. Specifically, the visible light absorbing layer 50 may include niobium nitride. A thickness of the visible light absorbing layer 50 may be 1 to 3 nm. In addition, a refractive index of the visible light absorbing layer 50 for light with a wavelength of 550 nm may be 3.2 to 3.6. In addition, an extinction coefficient of the visible light absorbing layer 50 may be 1.8 or less.

In an exemplary embodiment of the present invention, the transparent substrate provided with a multilayer thin film may further include an overcoat layer (not illustrated) formed on the fourth stack 80. The overcoat layer may include one or more selected from the group consisting of a $TiO_x$ dopant, a $TiO_xN_y$ dopant, a $TiN_x$ dopant, and a Zr dopant. More specifically, the overcoat layer may include $TiZr_xO_yN_z$ (here, x is 0.5 to 0.7, y is 2.0 to 2.5, and z is 0.2 to 0.6).

By the configuration described above, the transparent substrate according to an exemplary embodiment of the present invention may simultaneously implement an excellent emissivity, uncoated surface reflectance, coated surface reflectance, selectivity, and color. Since the description of the color has been explained above, the duplicated description thereof will be omitted.

A visible transmittance (TL) may be 40 to 60%, an uncoated surface reflectance (Rext) may be 5 to 30%, and a coated surface reflectance (Rin) may be 15% or less.

A corrected emissivity may be 2.5% or less.

A solar heat gain coefficient (SHGC) may be 0.35 or less.

A selectivity may be 1.6 or more. The selectivity refers to a value obtained by dividing a visible transmittance by a solar heat gain coefficient.

The transparent substrate 100 according to an exemplary embodiment of the present invention may satisfy one or more characteristics described above. In addition, the transparent substrate 100 according to an exemplary embodiment of the present invention may simultaneously satisfy two or more characteristics described above. Since these characteristics may be closely related to each other, these characteristics need to be adequately adjusted depending on a desired product specification.

The transparent substrate 100 according to an exemplary embodiment of the present invention may be used in a multiple glazing unit, a laminated glass, and the like.

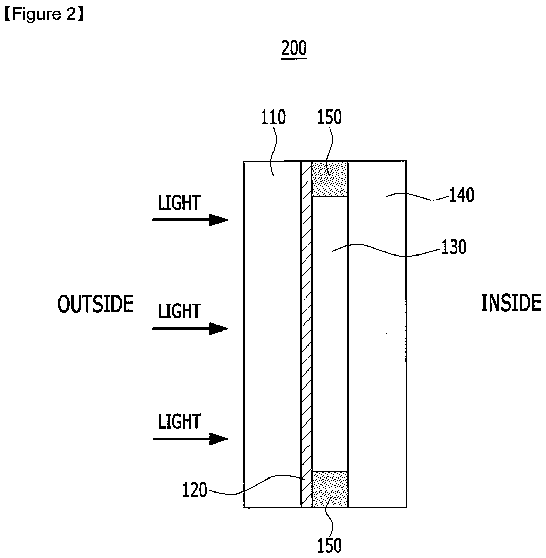

FIG. 2 schematically illustrates a cross section of a multiple glazing unit 200 according to an exemplary embodiment of the present invention. The multiple glazing unit 200 of FIG. 2 is merely to illustrate the present invention and the present invention is not limited thereto. Accordingly, the multiple glazing unit 200 of FIG. 2 may be modified in various forms.

As illustrated in FIG. 2, the multiple glazing unit according to an exemplary embodiment of the present invention is a multiple glazing unit including two or more transparent substrates (110 and 140) spaced apart from each other, and at least one of the two or more transparent substrates (110 and 140) is the transparent substrate 110 provided with a multilayer thin film 120 described above. The multiple glazing unit 200 includes two or more transparent substrates spaced apart from each other with a spacer 150 interposed therebetween, and one or more gas separation interfaces 130 are disposed between the two substrates. The transparent substrate 110 provided with the multilayer thin film 120 and the transparent 140 with no separate thin film are illustrated in FIG. 2; however, other than this structure, the same multilayer thin film 120 may be formed on an upper surface, a lower surface, or each of both the upper and lower surfaces of the transparent substrate 140, and a different thin film may be formed on the transparent substrate 140.

The gas separation interface 130 may be filled with gas such as air or argon.

The multiple glazing unit 200 may have a transmissive color in range of $-4 \leq a^* \leq -9$ and $0 \leq b^* \leq -3$ on CIELAB color coordinates, and may have an external reflective color in range of $-3 \leq a^* \leq 0$ and $-8 \leq b^* \leq -2$ on CIELAB color coordinates. More specifically, the multiple glazing unit 200 may have a transmissive color in range of $-5 \leq a^* \leq -8$ and $-1 \leq b^* \leq -2$ on CIELAB color coordinates, and may have an external reflective color in range of $-2 \leq a^* \leq -1$ and $-7 \leq b^* \leq -4$ on CIELAB color coordinates.

A solar heat gain coefficient (SHGC) of the multiple glazing unit 200 may be 0.30 or less.

A selectivity of the multiple glazing unit 200 may be 1.7 or more.

The multiple glazing unit 200 may be used for buildings, vehicles, transportation equipment, furniture, home appliances, or renewable energy industry.

Hereinafter, the present invention will be described in more detail with reference to experimental examples. However, these experimental examples are merely to illustrate the present invention and the present invention is not limited thereto.

**Experimental Example**

A transparent substrate, a first stack, a first metallic functional layer, a second stack, a visible light absorbing layer, a third stack, a second metallic functional layer, a fourth stack, and an overcoat layer were sequentially stacked.

A glass substrate having a thickness of 6 mm (product name: Hanlite Clear, manufactured by Saint-Gobain) was used as the transparent substrate. The first stack was constituted by two layers ($Si_xN_y$-ZnO), the first metallic functional layer was constituted by a single Ag layer, the second stack was constituted by two layers (ZnO-$Si_xN_Y$), the visible light absorbing layer was constituted by a single NbN layer having a thickness of 3 mm, the third stack was constituted by three layers ($Si_xN_y$-SnZnO-ZnO) doped with Zr, the second metallic functional layer was constituted by a single Ag layer, the fourth stack was constituted by two layers (ZnO-$Si_xN_Y$), and the overcoat layer was constituted by a single $TiZr_xO_yN_z$ layer. Ni-Cr protective layers each having a thickness of about 1 mm were stacked on upper surfaces and lower surfaces of the first metallic functional layer and the second metallic functional layer.

An absorbance for light with a wavelength of 450 nm (Abs@450nm), an absorbance for light with a wavelength of 550 nm (Abs@550nm), and an absorbance for light with a wavelength of 650 nm (Abs@650nm) were measured while changing thicknesses of the first stack, the first metallic functional layer, the second stack, the third stack, the second metallic functional layer, and the fourth stack as in Table 1, and the results are shown in Table 1.

[Table 1]

| No. | First stack (nm) | First metallic functional layer (nm) | Second stack (nm) | Third stack (nm) | Second metallic functional layer (nm) | Fourth stack (nm) | Abs @450nm (%) | 4bs @550nm (%) | Abs @650nm (%) |
|---|---|---|---|---|---|---|---|---|---|
| 1 | 10 | 10 | 10 | 60 | 20 | 35 | 27.5 | 39.3 | 59.1 |
| 2 | 10 | 10 | 35 | 35 | 20 | 35 | 38.2 | 44.1 | 59.7 |
| 3 | 10 | 10 | 30 | 10 | 20 | 35 | 34.8 | 41.5 | 55.6 |
| 4 | 10 | 15 | 10 | 60 | 15 | 35 | 29.1 | 33.9 | 45.7 |
| 5 | 10 | 15 | 35 | 35 | 15 | 35 | 36.4 | 36.3 | 45.9 |
| 6 | 10 | 15 | 60 | 10 | 15 | 35 | 32.7 | 35.4 | 44.0 |
| 7 | 10 | 20 | 10 | 60 | 10 | 35 | 31.4 | 28.6 | 33.6 |
| 8 | 10 | 20 | 35 | 35 | 10 | 35 | 35.3 | 28.9 | 33.8 |
| 9 | 10 | 20 | 60 | 10 | 10 | 35 | 31.6 | 29.0 | 33.7 |
| 10 | 20 | 10 | 10 | 60 | 20 | 35 | 29.1 | 40.1 | 59.4 |
| 11 | 20 | 10 | 35 | 35 | 20 | 35 | 40.3 | 45.1 | 60.2 |

(continued)

| No. | First stack (nm) | First metallic functional layer (nm) | Second stack (nm) | Third stack (nm) | Second metallic functional layer (nm) | Fourth stack (nm) | Abs @450nm (%) | 4bs @550nm (%) | Abs @650nm (%) |
|---|---|---|---|---|---|---|---|---|---|
| 12 | 20 | 10 | 60 | 10 | 20 | 35 | 36.5 | 42.1 | 55.9 |
| 13 | 20 | 15 | 10 | 60 | 15 | 35 | 30.7 | 35.3 | 47.0 |
| 14 | 20 | 15 | 35 | 35 | 15 | 35 | 38.3 | 37.9 | 47.4 |
| 15 | 20 | 15 | 30 | 10 | 15 | 35 | 34.1 | 36.7 | 45.4 |
| 16 | 20 | 20 | 10 | 60 | 10 | 35 | 33.0 | 30.2 | 34.9 |
| 17 | 20 | 20 | 35 | 35 | 10 | 35 | 37.0 | 30.6 | 35.2 |
| 18 | 20 | 20 | 60 | 10 | 10 | 35 | 32.8 | 30.6 | 35.0 |
| 19 | 30 | 10 | 10 | 30 | 20 | 35 | 30.5 | 41.0 | 59.3 |
| 20 | 30 | 10 | 35 | 35 | 20 | 35 | 42.0 | 46.0 | 60.2 |
| 21 | 30 | 10 | 30 | 10 | 20 | 35 | 38.0 | 42.6 | 55.7 |
| 22 | 30 | 15 | 10 | 60 | 15 | 35 | 31.7 | 36.4 | 48.0 |
| 23 | 30 | 15 | 35 | 35 | 15 | 35 | 39.2 | 39.0 | 48.5 |
| 24 | 30 | 15 | 30 | 10 | 15 | 35 | 34.9 | 37.5 | 46.3 |
| 25 | 30 | 20 | 10 | 30 | 10 | 35 | 33.6 | 31.4 | 36.0 |
| 26 | 30 | 20 | 35 | 35 | 10 | 35 | 37.3 | 31.8 | 36.4 |
| 27 | 30 | 20 | 30 | 10 | 10 | 35 | 33.0 | 31.6 | 36.2 |

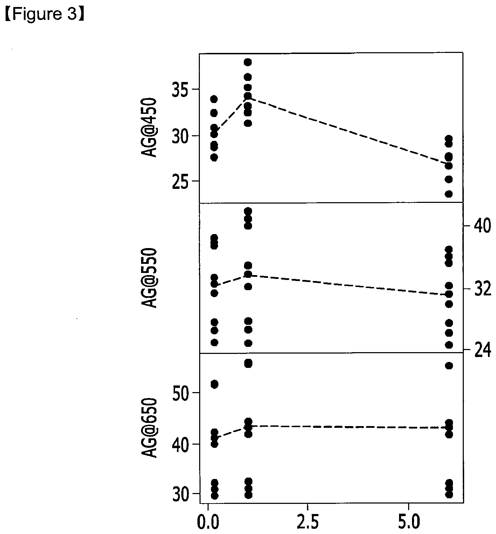

The contents of Table 1 are illustrated in FIGS. 3 to 5.

FIG. 3 is a graph showing the results of measuring an absorbance for each ratio of a thickness of a third stack to a thickness of a second stack. As illustrated in FIG. 3, it could be confirmed that, when the ratio of the thickness of the third stack to the thickness of the second stack was 2.5 or more, the absorbance for light with a wavelength of 450 nm (Abs@450nm) was sharply decreased.

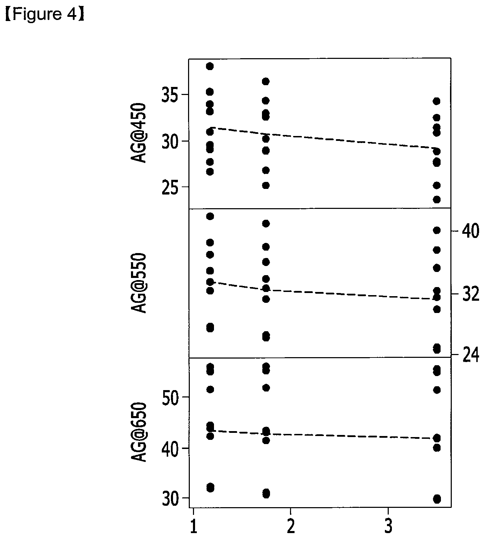

FIG. 4 is a graph showing the results of measuring an absorbance for each ratio of a thickness of a fourth stack to a thickness of a first stack. As illustrated in FIG. 4, it could be confirmed that, when the ratio of the thickness of the fourth stack to the thickness of the first stack was 1.5 or more, the absorbance for light with a wavelength of 450 nm (Abs@450nm) was slightly decreased.

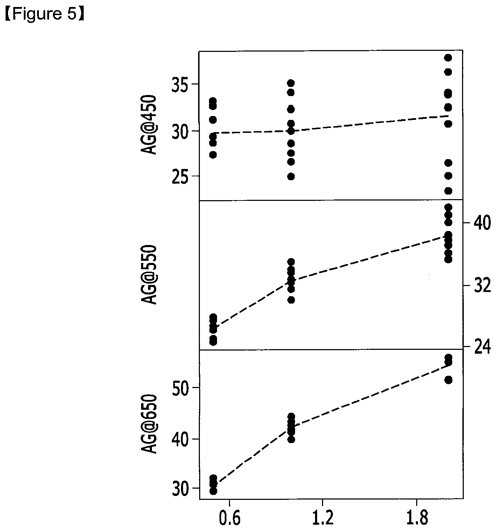

FIG. 5 is a graph showing the results of measuring an absorbance for each ratio of a thickness of a second metallic functional layer to a thickness of a first metallic functional layer. As illustrated in FIG. 5, it could be confirmed that, as the ratio of the thickness of the second metallic functional layer to the thickness of the first metallic functional layer was increased, the absorbance for light with a wavelength of 550 nm (Abs@550nm) and the absorbance for light with a wavelength of 650 nm (Abs@650nm) were sharply increased.

A transmittance, an uncoated surface transmittance, an uncoated surface reflectance, a coated surface reflectance, an SHGC, a selectivity, and a corrected emissivity of each of Nos. 13 and 14 in Table 1 were measured.

In addition, a double glazing unit including a transparent substrate provided with a multilayer thin film having a thickness of 6 mm, a gas separation interface having a thickness of 16 mm, and a glass substrate having a thickness of 6 mm (product name: Hanlite Clear, manufactured by Saint-Gobain) was produced, a transmittance and an external reflectance of the double glazing unit were measured, and the results are shown in Tables 2 and 3.

[Table 2]

| | Transmi ttance | | | Uncoated surface reflectance | | | Coated surface reflectance | | | SHGC I | Selec tivity | Corrected emissivity |
|---|---|---|---|---|---|---|---|---|---|---|---|---|
| | % | a* | b* | Y I | a* | b* | Y | a* | b* | (NFRC) | (NFR C) | |
| Exampl e (No. 13) | 5 5 | 6.3 | - | 14.1 | 0. 3 | 4. 5 | 2 | 1 1 | 1 3 | 0.3 | 1.83 | 0.021 |
| Compa rative Exampl e (No. 14) | 5 5 | 6.6 | 2.4 | 13.1 | 0. 5 | 5. 3 | 9 | 6 | 2 0 | 0.36 | 1.53 | 0.029 |

[Table 3]

| | Transmittanc e | | | External reflectance | | | SHGC | Selectivit y |
|---|---|---|---|---|---|---|---|---|
| | % | a* | b* | Y | a* | b* | (NFRC) | (NFRC) |
| Example (No. 13) | 49 | -7 | -1 | 17 | -1.5 | -4.5 | 0.25 | 1.96 |
| Comparativ e Example (No. 14) | 49 | -7.5 | 2.6 | 16 | -1.7 | -5.3 | 0.26 | 1.88 |

As shown in Tables 2 and 3, it was confirmed that the transparent substrate provided with a multilayer thin film and the double glazing unit according to an exemplary embodiment of the present invention could simultaneously implement an excellent emissivity, uncoated surface reflectance, coated surface reflectance, selectivity, and color.

The present invention is not limited to the exemplary embodiments and may be produced in various forms, and it will be understood by those skilled in the art to which the present invention pertains, that exemplary embodiments of the present invention may be implemented in other specific forms without modifying the essential features of the present invention. Therefore, it should be understood that the aforementioned exemplary embodiments are illustrative in terms of all aspects and are not limited.

**<Description of symbols>**

100: transparent substrate provided with multilayer thin film,
110: transparent substrate,
20: first stack,
21, 22: dielectric layer,
30: first metallic functional layer,
40: second stack,
41, 42: dielectric layer,
50: visible light absorbing layer,
60: third stack,
61, 62: dielectric layer,
70: second metallic functional layer,
80: fourth stack,
81, 82: dielectric layer,
91, 92, 93, 94: blocking layer,
200: multiple glazing unit,
120: multilayer thin film,
130: gas separation interface,
140: transparent substrate,
150: spacer

**Claims**

1. A transparent substrate provided with a multilayer thin film, comprising:

   a transparent substrate;
   a first stack positioned on the transparent substrate and including at least one dielectric layer;
   a first metallic functional layer positioned on the first stack and having an infrared reflective property;
   a second stack positioned on the first metallic functional layer and including at least one dielectric layer;
   a visible light absorbing layer positioned on the second stack;
   a third stack positioned on the visible light absorbing layer and including at least one dielectric layer;
   a second metallic functional layer positioned on the third stack and having an infrared reflective property; and
   a fourth stack positioned on the second metallic functional layer and including at least one dielectric layer,
   wherein a ratio of a thickness of the third stack to a thickness of the second stack is 2.5 or more.

2. The transparent substrate provided with a multilayer thin film of claim 1, wherein:
   a ratio of a thickness of the fourth stack to a thickness of the first stack is 1.5 or more.

3. The transparent substrate provided with a multilayer thin film of claim 1 or 2, wherein:
   the transparent substrate provided with the multilayer thin film has a transmissive color in ranges of $-4 \leq a^* \leq -9$ and $0 \leq b^* \leq -3$ on CIELAB color coordinates, and a reflective color on an uncoated surface in range of $-2 \leq a^* \leq 1$ and $-8 \leq b^* \leq -3$ on the CIELAB color coordinates.

4. The transparent substrate provided with a multilayer thin film of one of claims 1 to 3, wherein:
   an absorbance for light with a wavelength of 450 nm is 35% or less.

5. The transparent substrate provided with a multilayer thin film of one of claims 1 to 4, further comprising:
   blocking layer stacked on at least one of upper surfaces and lower surfaces of the first and second metallic functional layers and preventing the first and second metallic functional layers from being oxidized.

6. The transparent substrate provided with a multilayer thin film of one of claims 1 to 5, wherein:

   a visible transmittance is 40 to 60%,
   an uncoated surface reflectance is 5 to 30%, and
   a coated surface reflectance is 15% or less.

7. The transparent substrate provided with a multilayer thin film of one of claims 1 to 6, wherein:
   a corrected emissivity is 2.5% or less.

8. The transparent substrate provided with a multilayer thin film of one of claims 1 to 7. wherein:
   a solar heat gain coefficient is 0.35 or less.

9. The transparent substrate provided with a multilayer thin film of one of claims 1 to 8, wherein:
   a selectivity is 1.6 or more.

10. A multiple glazing unit comprising:

    two or more transparent substrates spaced apart from each other,
    wherein at least one of the two or more transparent substrates is the transparent substrate provided with a multilayer thin film of one of claims 1 to 9.

11. The multiple glazing unit of claim 10, wherein:
    the multiple glazing unit has a transmissive color in range of $-4 \leq a^* \leq -9$ and $0 \leq b^* \leq -3$ on CIELAB color coordinates, and has an external reflective color in range of $-3 \leq a^* \leq 0$ and $-8 \leq b^* \leq -2$ on CIELAB color coordinates.

12. The multiple glazing unit of claim 10 or 11, wherein:
    a solar heat gain coefficient is 0.3 or less.

13. The multiple glazing unit of one of claims 10 to 12, wherein:

a selectivity is 1.7 or more.

**Patentansprüche**

1. Transparentes Substrat, das mit einem mehrschichtigen Dünnfilm versehen ist, umfassend:

   ein transparentes Substrat;
   einen ersten Stapel, der auf dem transparenten Substrat positioniert ist und mindestens eine dielektrische Schicht einschließt;
   eine erste metallische Funktionsschicht, die auf dem ersten Stapel positioniert ist und eine infrarotreflektierende Eigenschaft aufweist;
   einen zweiten Stapel, der auf der ersten metallischen Funktionsschicht positioniert ist und mindestens eine dielektrische Schicht einschließt;
   eine Schicht, die sichtbares Licht absorbiert, die auf dem zweiten Stapel positioniert ist;
   einen dritten Stapel, der auf der Schicht, die sichtbares Licht absorbiert, positioniert ist und mindestens eine dielektrische Schicht einschließt;
   eine zweite metallische Funktionsschicht, die auf dem dritten Stapel positioniert ist und eine infrarotreflektierende Eigenschaft aufweist; und
   einen vierten Stapel, der auf der zweiten metallischen Funktionsschicht positioniert ist und mindestens eine dielektrische Schicht einschließt,
   wobei ein Verhältnis von einer Dicke des dritten Stapels zu einer Dicke des zweiten Stapels 2,5 oder mehr beträgt.

2. Transparentes Substrat, das mit einem mehrschichtigen Dünnfilm versehen ist, nach Anspruch 1, wobei:
   ein Verhältnis von einer Dicke des vierten Stapels zu einer Dicke des ersten Stapels 1,5 oder mehr beträgt.

3. Transparentes Substrat, das mit einem mehrschichtigen Dünnfilm versehen ist, nach Anspruch 1 oder 2, wobei:
   das transparente Substrat, das mit dem mehrschichtigen Dünnfilm versehen ist, eine durchlässige Farbe in Bereichen von $-4 \leq a^* \leq -9$ und $0 \leq b^* \leq -3$ auf CIELAB-Farbkoordinaten und eine reflektierende Farbe auf einer unbeschichteten Oberfläche im Bereich von $-2 \leq a^* \leq 1$ und $-8 \leq b^* \leq -3$ auf den CIELAB-Farbkoordinaten aufweist.

4. Transparentes Substrat, das mit einem mehrschichtigen Dünnfilm versehen ist, nach einem der Ansprüche 1 bis 3, wobei:
   eine Absorption für Licht mit einer Wellenlänge von 450 nm 35 % oder weniger beträgt.

5. Transparentes Substrat, das mit einem mehrschichtigen Dünnfilm versehen ist, nach einem der Ansprüche 1 bis 4, ferner umfassend:
   eine Blockierschicht, die auf mindestens einer von oberen Oberflächen und unteren Oberflächen der ersten und der zweiten metallischen Funktionsschicht gestapelt ist und verhindert, dass die erste und die zweite metallische Funktionsschicht oxidiert werden.

6. Transparentes Substrat, das mit einem mehrschichtigen Dünnfilm versehen ist, nach einem der Ansprüche 1 bis 5, wobei:

   eine sichtbare Durchlässigkeit 40 bis 60 % beträgt,
   eine Reflexion einer unbeschichteten Oberfläche 5 bis 30 % beträgt, und
   eine Reflexion einer beschichteten Oberfläche 15 % oder weniger beträgt.

7. Transparentes Substrat, das mit einem mehrschichtigen Dünnfilm versehen ist, nach einem der Ansprüche 1 bis 6, wobei:
   ein korrigierter Emissionsgrad 2,5 % oder weniger beträgt.

8. Transparentes Substrat, das mit einem mehrschichtigen Dünnfilm versehen ist, nach einem der Ansprüche 1 bis 7, wobei:
   ein Koeffizient eines solaren Wärmegewinns 0,35 oder weniger beträgt.

9. Transparentes Substrat, das mit einem mehrschichtigen Dünnfilm versehen ist, nach einem der Ansprüche 1 bis 8, wobei:

eine Selektivität 1,6 oder mehr beträgt.

10. Mehrfachverglasungseinheit, umfassend:

zwei oder mehr transparente Substrate, die voneinander beabstandet sind,
wobei mindestens eines der zwei oder mehr transparenten Substrate das transparente Substrat das mit einem mehrschichtigen Dünnfilm versehen ist, nach einem der Ansprüche 1 bis 9 ist.

11. Mehrfachverglasungseinheit nach Anspruch 10, wobei:
die Mehrfachverglasungseinheit eine durchlässige Farbe im Bereich von -4 ≤ a* ≤ -9 und 0 ≤ b* ≤ -3 auf CIELAB-Farbkoordinaten aufweist und eine externe reflektierende Farbe im Bereich von -3 ≤ a* ≤ 0 und -8 ≤ b* ≤-2 auf CIELAB-Farbkoordinaten aufweist.

12. Mehrfachverglasungseinheit nach Anspruch 10 oder 11, wobei:
ein Koeffizient des solaren Wärmegewinns 0,3 oder weniger beträgt.

13. Mehrfachverglasungseinheit nach einem der Ansprüche 10 bis 12, wobei:
eine Selektivität 1,7 oder mehr beträgt.

## Revendications

1. Substrat transparent pourvu d'un film mince multicouche, comprenant :

un substrat transparent ;
un premier empilement positionné sur le substrat transparent et comportant au moins une couche diélectrique ;
une première couche fonctionnelle métallique positionnée sur le premier empilement et ayant une propriété de réflexion infrarouge ;
un deuxième empilement positionné sur la première couche fonctionnelle métallique et comportant au moins une couche diélectrique ;
une couche d'absorption de lumière visible positionnée sur le deuxième empilement ;
un troisième empilement positionné sur la couche d'absorption de lumière visible et comportant au moins une couche diélectrique ;
une seconde couche fonctionnelle métallique positionnée sur le troisième empilement et ayant une propriété de réflexion infrarouge ; et
un quatrième empilement positionné sur la seconde couche fonctionnelle métallique et comportant au moins une couche diélectrique,
dans lequel un rapport d'une épaisseur du troisième empilement sur une épaisseur du deuxième empilement est de 2,5 ou plus.

2. Substrat transparent pourvu d'un film mince multicouche selon la revendication 1, dans lequel :
un rapport d'une épaisseur du quatrième empilement sur une épaisseur du premier empilement est de 1,5 ou plus.

3. Substrat transparent pourvu d'un film mince multicouche selon la revendication 1 ou 2, dans lequel :
le substrat transparent pourvu du film mince multicouche a une couleur en transmission dans des plages de -4 ≤ a* ≤ -9 et 0 ≤ b* ≤ -3 selon des coordonnées de couleur CIELAB, et une couleur réflexion sur une surface non revêtue dans la plage de -2 ≤ a* ≤ 1 et -8 ≤ b* ≤ -3 selon les coordonnées de couleur CIELAB.

4. Substrat transparent pourvu d'un film mince multicouche selon l'une des revendications 1 à 3, dans lequel :
une absorption pour la lumière ayant une longueur d'onde de 450 nm est de 35 % ou moins.

5. Substrat transparent pourvu d'un film mince multicouche selon l'une des revendications 1 à 4, comprenant en outre :
une couche de blocage au contact sur au moins l'une des surfaces supérieures et des surfaces inférieures des première et seconde couches fonctionnelles métalliques et empêchant l'oxydation des première et seconde couches fonctionnelles métalliques.

6. Substrat transparent pourvu d'un film mince multicouche selon l'une des revendications 1 à 5, dans lequel :

une transmission visible est de 40 à 60 %,
une réflexion de surface non revêtue est de 5 à 30 %, et
une réflexion de surface revêtue est de 15 % ou moins.

**7.** Substrat transparent pourvu d'un film mince multicouche selon l'une des revendications 1 à 6, dans lequel :
une émissivité corrigée est de 2,5 % ou moins.

**8.** Substrat transparent pourvu d'un film mince multicouche selon l'une des revendications 1 à 7, dans lequel :
un coefficient de gain thermique solaire est de 0,35 ou moins.

**9.** Substrat transparent pourvu d'un film mince multicouche selon l'une des revendications 1 à 8, dans lequel :
une sélectivité est de 1,6 ou plus.

**10.** Unité de vitrage multiple comprenant :

deux substrats transparents ou plus espacés les uns des autres,
dans laquelle au moins l'un des deux substrats transparents ou plus est le substrat transparent pourvu d'un film mince multicouche selon l'une des revendications 1 à 9.

**11.** Unité de vitrage multiple selon la revendication 10, dans laquelle :
le vitrage multiple a une couleur en transmission dans la plage de $-4 \leq a^* \leq -9$ et $0 \leq b^* \leq -3$ selon des coordonnées de couleur CIELAB, et a une couleur en réflexion externe dans la plage de $-3 \leq a^* \leq 0$ et $-8 \leq b^* \leq -2$ selon des coordonnées de couleur CIELAB.

**12.** Unité de vitrage multiple selon la revendication 10 ou 11, dans laquelle :
un coefficient de gain thermique solaire est de 0,3 ou moins.

**13.** Unité de vitrage multiple selon l'une des revendications 10 à 12, dans laquelle :
une sélectivité est de 1,7 ou plus.

【Figure 1】

【Figure 2】

【Figure 3】

【Figure 4】

【Figure 5】